# EUROPÄISCHE PATENTSCHRIFT

(11) **EP 3 517 235 B1**
(45) Veröffentlichungstag und Bekanntmachung des Hinweises auf die Patenterteilung: **09.12.2020**
(21) Anmeldenummer: 18153423.1
(22) Anmeldetag: 25.01.2018
(51) Int. Cl.: B23F 19/10, B23F 9/00

(54) **VERFAHREN ZUM ENTGRATEN VON KEGELRÄDERN UND CNC-VERZAHNMASCHINE MIT EINER ENTSPRECHENDEN SOFTWARE ZUM ENTGRATEN**
METHOD FOR DEBURRING BEVEL WHEELS AND CNC MACHINE WITH A CORRESPONDING SOFTWARE FOR DEBURRING
PROCÉDÉ D'ÉBARBAGE DE PIGNONS CONIQUE ET MACHINE À TAILLER LES ENGRENAGES CNC POURVUE D'UN LOGICIEL D'ÉBARBAGE CORRESPONDANT

(43) Veröffentlichungstag der Anmeldung: 31.07.2019
(73) Patentinhaber: Klingelnberg GmbH, 42499 Hückeswagen (DE)
(72) Erfinder: Ribbeck, Karl-Martin, 42897 Remscheid (DE); Töpfer, Gary, 42897 Remscheid (DE); Weber, Jürgen, 42499 Hückeswagen (DE)
(74) Vertreter: Heusch, Christian

(56) Entgegenhaltungen:
- EP-A1- 2 181 789
- WO-A1-92/05004
- DE-C1- 4 200 418
- US-A1- 2017 261 068

## Beschreibung

Die vorliegende Erfindung betrifft ein Verfahren gemäß dem Oberbegriff des Patentanspruchs 1, zum Entgraten von Kegelrädern und eine CNC-Verzahnmaschine, die mit einer entsprechenden Software zum Entgraten ausgestattet ist. Ein derartiges Verfahren geht beispielsweise aus der WO 92/05004 A1 hervor.

### Stand der Technik

Beim Fertigen von Kegelrädern kann z.B. am äußeren Zahnende durch die spanabhebende Bearbeitung ein Grat (hier auch als Primärgrat bezeichnet) entstehen. Wegen der Verletzungsgefahr, aber auch wegen der Gefahr des Durchhärtens beim Härten der Kegelräder, werden diese Zahnkanten häufig im Rahmen eines Anfasens/Entgratens durch eine Fase gebrochen.

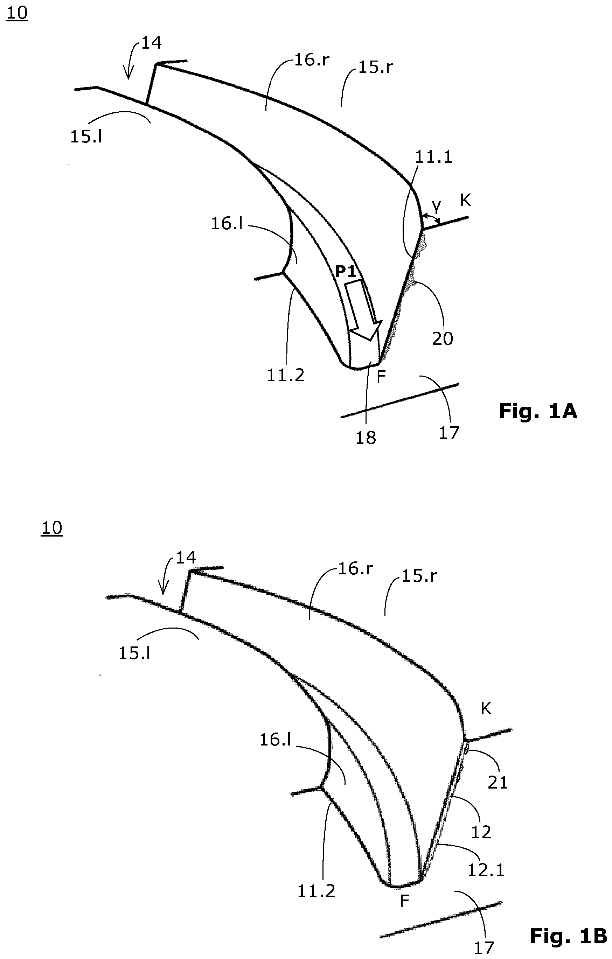

Bei dem erwähnten Entgraten kann, je nach Konstellation, beim Entfernen des Primärgrats am Kegelrad ein Sekundärgrat entstehen. Falls das Primärentgraten mit einem Entgratwerkzeug erfolgt, dessen Schneid(en) aus einer Zahnlücke kommend nach außen geführt werden, so entsteht der Sekundärgrat am äußeren Umfang des Kegelrads, wie in Fig. 1A gezeigt. Falls hingegen das Entgratwerkzeug beim Primärentgraten vom Zahnfuß F zum Zahnkopf K des Kegelrads 10 (in eine Zahnlücke 14 hinein) geführt wird, so entsteht der Sekundärgrat im Funktionsbereich des Kegelrads 10. In der Serienfertigung wird daher in den meisten Fällen das Primärentgraten von Innen nach Außen, wie in Fig. 1A durch den Blockpfeil P1 symbolisiert, durchgeführt.

Ein entsprechendes Beispiel ist in Fig. 1A gezeigt. Ein Primärgrat tritt hauptsächlich an der Zahnkante 11.1 der konkaven Flanke 16.r auf, da diese Flanke 16.r mit der Rückenfläche 17 des Kegelradzahnes 10 in der Regel einen relativ spitzen Winkel γ bildet. Würde man an dieser Zahnkante 11.1 nur den Primärgrat 20 entfernen (z.B. durch den Einsatz einer Bürste), bliebe eine sehr scharfe Zahnkante 11.1 stehen. Daher wird mindestens im Bereich der Zahnkante 11.1 durch Entgraten eine Fase erzeugt.

In Fig. 1B ist anhand des Kegelrads 10 der Fig. 1A die Situation nach dem Anfasen der Zahnkante 11.1 gezeigt. Man kann in Fig. 1B schematisch den Verlauf der ersten Fase 12 erkennen. Wie in Fig. 1B auch zu erkennen ist, kann sich entlang der ersten Fase 12 ein Sekundärgrat 21 bilden.

Sekundärgrat 21 tritt jedoch nicht immer auf. Es zeigen sich hier Zusammenhänge unter anderem mit der Qualität der Schneiden des Entgratwerkzeugs. Solange das Entgratwerkzeug scharfe Schneiden hat, verläuft das Primärentgraten relativ zuverlässig. Mit stumpfer werdenden Schneiden wird das Material des Kegelrads 10 nicht mehr geschnitten sondern verdrängt. In diesem Fall steigt die Tendenz zur Bildung von Sekundärgrat 21. Da die Zahnkante zwischen Kegelradzähnen 15.r, 15.l und z.B. der Ferse Fe des Kegelrads 10 meist keinen geraden Verlauf hat, variiert die Dicke der beim Entgraten abzuhebenden Späne. Auch aus diesem Grund können teilweise Sekundärgrate entstehen.

Falls man hingegen das Entgratwerkzeug beim Entgraten in eine Zahnlücke 14 hinein bewegt, so kann der Sekundärgrat im Funktionsbereich des Kegelrads 10 entstehen. Daher wird dieser Ansatz in der Serienfertigung nicht gerne gewählt.

Es gibt einen weiteren Aspekt, der einen deutlichen Einfluss auf das Entgraten haben kann. Um das Entgraten in einem kontinuierlich ablaufenden Vorgang vornehmen zu können, bedarf es einer festen positiven Kopplung der Drehbewegungen des Entgratwerkzeugs und des Kegelrads 10. Je nach Antriebsart des Entgratwerkzeugs (teilweise wird hier mit einem Riemenantrieb gearbeitet), kann es jedoch dazu kommen, dass die Drehbewegung des Entgratwerkzeugs nachzueilen beginnt. Das kann vor allem dann auftreten, wenn beim Entgraten am Entgratwerkzeug zu große Schneidkräfte auftreten. Die positive Kopplung bewirkt nun aber, dass sich beim Nacheilen des Entgratwerkzeugs das Entgratwerkzeug weiter in das Material des Kegelrades 10 hineinfrisst. Beim Nacheilen versucht das Entgratwerkzeug eine größer werdende Fase zu schneiden und die Schneidkräfte nehmen weiter zu. Dieser Effekt kann zum Zerstören des Entgratwerkzeugs führen.

Es gibt noch einen weiteren Aspekt, der bei der Kegelradfertigung eine wichtige Rolle spielt. Aufgrund wirtschaftlicher Rahmenbedingungen, sollte die Kegelradfertigung - zumindest wenn es um die Serienproduktion geht - in all ihren Abläufen optimiert werden, um einerseits schonend mit den Ressourcen umzugehen und um andererseits pro Zeiteinheit möglichst viele Kegelräder bearbeiten zu können.

Das eingangs beschriebene Entgraten ist ein Teilprozess der Kegelradfertigung. Auch in diesem Teilprozess scheint es Potential für weitere Verbesserungen der Abläufe zu geben.

Es gibt daher einerseits den Bedarf Kegelräder zuverlässig und sicher zu entgraten. Speziell in der Serienherstellung von Kegelrädern - zum Beispiel im Automobilbau - müssen die Probleme, die sich im Zusammenhang mit Primärgrat und Sekundärgrat ergeben, vermieden werden.

Andererseits gibt es den Bedarf das Entgraten effizienter zu gestalten.

Von daher liegt der Erfindung die Aufgabe zugrunde, ein Verfahren zum Entgraten von Kegelrädern und eine CNC Kegelrad-Verzahnmaschine mit einer entsprechenden Software bereitzustellen, damit ein Entgraten mit geringem Aufwand und möglichst effizient erfolgen kann, ohne das Entgratwerkzeug zu zerstören.

Die Aufgaben werden erfindungsgemäss durch eine Verfahren gemäss Patentanspruch 1 und eine CNC Kegelrad-Verzahnmaschine mit einem Softwaremodul, gemäß Anspruch 8 gelöst, die zum Ausführen des Verfahrens gemäss Patentanspruch 1 ausgestattet ist. Vorteilhafte Ausgestaltungen der Erfindung bilden die Gegenstände der abhängigen Ansprüche.

Erfindungsgemäss wird diese Aufgabe durch ein Verfahren zum Entgraten von Kegelrädern gelöst, bei dem ein Entgratwerkzeug, vorzugsweise ein Entgratmesserkopf, mit mindestens einer Schneide eingesetzt wird. Das Verfahren umfasst die folgenden Schritte:
- Drehantreiben des Entgratwerkzeugs um eine Entgratspindelachse,
- Drehantreiben eines Kegelrades um eine Werkstückspindelachse,
   wobei
- das Drehantreiben des Entgratwerkzeugs und das Drehantreiben des Kegelrades gekoppelt mit einer inversen Kopplungsübersetzung erfolgt,
- es sich um ein kontinuierliches Verfahren zum Entgraten handelt,
- das Entgratwerkzeug in Bezug zum Kegelrad eine relative Flugbewegung ausführt,
- die relative Flugbewegung durch eine Hypozykloide definiert ist, und wobei
- mindestens an einer Zahnkante einer Zahnlücke im Bereich der Kegelradferse und/oder der Kegelradzehe durch eine Schneidberührung der Schneide mit der Zahnkante ein Grat entfernt wird.

Bei mindestens einem Teil der Ausführungsformen führt die relative Flugbewegung der Schneide in eine Zahnlücke des Kegelrades hinein, d.h. das Entgraten wird durch eine relative Flugbewegung von Außen nach Innen durchgeführt.

Bei mindestens einem Teil der Ausführungsformen führt die Schneide in Bezug zu dem Kegelrad eine relative Flugbewegung mit einer Bewegungsrichtung aus, die aus der Zahnlücke des Kegelrades hinaus führt.

Beim Entgraten von Kegelradritzeln wird vorzugsweise eine relative Flugbewegung mit einer Bewegungsrichtung der Schneide durchgeführt, die vom Zahnfuß zum Zahnkopf führt.

Beim Entgraten von Kegelradtellerrädern wird vorzugsweise eine relative Flugbewegung mit einer Bewegungsrichtung der Schneide durchgeführt, die vom Zahnkopf zum Zahnfuß führt.

Bei mindestens einem Teil der Ausführungsformen kommt eine hypozykloidische Kopplung als inverse Kopplungsübersetzung zum Einsatz. Eine solche hypozykloidische Kopplung hat den Vorteil, dass einerseits das Entgraten von Außen nach Innen durchgeführt wird und dass andererseits die Flugbewegung der Schneide eine deutliche Verwindung aufweist. D.h. das Entgraten wird so durchgeführt, dass sich die Schneide nach dem Entgraten auf einer steilen Flugbahn aus dem (Kollisions-)Bereich des Kegelrades herausbewegt.

Bei mindestens einem Teil der Ausführungsformen kommt eine hypozykloidische Kopplung mit einer inversen Kopplungsübersetzung zum Einsatz, die sich aus der Zähnezahl des Kegelrades und der Gangzahl des Entgratwerkzeugs ergibt.

Bei mindestens einem Teil der Ausführungsformen kommt ein Entgratfräser, z.B. ein einstückiger Entgratfräser, ein Entgratmesserkopf mit Schneidplatten oder ein Entgratmesserkopf mit Stabmessern als Entgratwerkzeug zum Einsatz.

Bei mindestens einem Teil der Ausführungsformen führt die relative Flugbewegung der Schneide in eine Zahnlücke des Kegelrades hinein, wobei es zu einer Schneidberührung der Schneide mit einer Zahnkante der Zahnlücke des Kegelrades kommt, und wobei durch diese Schneidberührung der Grat im Bereich dieser Kante entfernt wird.

Bei mindestens einem Teil der Ausführungsformen ist die relative Flugbewegung der Schneide so gerichtet, dass sich nach der Schneidberührung die Zahnkante relativ zu der Schneide wegbewegt. Das hat den Vorteil, dass sich bei einem nachlaufenden Entgratwerkzeug die Schneide des Entgratwerkzeugs nicht automatisch weiter ins Material Kegelrades frisst.

Bei mindestens einem Teil der Ausführungsformen wird das Entgraten durchgeführt, nachdem das Kegelrad durch Fräsen, Schleifen, Stoßen, Schälen oder einem anderen Verfahren bearbeitet wurde.

Bei mindestens einem Teil der Ausführungsformen wird das Entgraten so durchgeführt, dass beim Entfernen des Grates eine Fase entlang der Zahnkante erzeugt wird.

Bei mindestens einem Teil der Ausführungsformen ist die relative Flugbewegung der Schneide so gerichtet, dass sich aufgrund der inversen Kopplungsübersetzung beim Entgraten automatisch eine kleiner werdende Fase ergibt, falls das Entgratwerkzeug nachzueilen beginnt.

Vorzugsweise kommt bei allen Ausführungsformen mindestens ein Entgratmesserkopf als Entgratwerkzeug zum Einsatz. Im Folgenden wird Entgratwerkzeug als der allgemeinere Begriff verwendet, wobei jeweils das Wort Entgratwerkzeug durch das Wort Entgratmesserkopf ersetzt werden kann, falls nicht explizit etwas anderes erwähnt ist.

Es wird gemäss Erfindung vorzugsweise bei allen Ausführungsformen eine CNC-Maschine (z.B. eine Kegelrad-Verzahnmaschine) mit einer Entgratvorrichtung mit einer Entgratspindel und eine Softwaremodul, das entsprechend programmiert ist, zum Entgraten eingesetzt.

Vorzugsweise kommen bei allen Ausführungsformen Entgratmesserköpfe zum Einsatz, die mit Messereinsätzen (z.B. in Form von Stabmessern) aus Hartmetall bestückt sind. Die Verwendung von Hartmetallmessereinsätzen bietet Freiheitsgrade bei der Gestaltung der Scheiden dieser Messereinsätze.

Es ist ein Vorteil der Erfindung, dass eine entsprechende Kegelrad-Verzahnmaschine flexibel einsetzbar ist und dass das Entgraten zuverlässig erfolgt.

Die wesentlichen Vorteile der Erfindung bestehen darin, dass mit den mittels eines Softwaremodules und einer CNC Steuerung numerisch steuerbaren Achsen (NC-Achsen) einer CNC-Maschine (z.B. einer Kegelrad-Verzahnmaschine) nahezu beliebig geformte Profilkanten von Kegelrädern mit der/den Schneiden des Entgratwerkzeugs erreichbar sind. Somit kann auch bei einer stark gekrümmten Profilkante ein Entgraten vorgenommen werden.

Die Erfindung lässt sich besonders vorteilhaft in einer 6-achsigen, CNC gesteuerten Kegelrad-Verzahnmaschine implementieren, die eine Entgratvorrichtung umfasst, der mindestens eine zusätzliche Achse zugeteilt ist. Vorzugsweise sind der Entgratvorrichtung bei allen Ausführungsformen mindestens eine Linearachse und eine Entgratspindelachse zugeordnet.

### ZEICHNUNGEN

Ausführungsbeispiele der Erfindung werden im Folgenden unter Bezugnahme auf die Zeichnungen näher beschrieben.
- **FIG. 1A**: zeigt eine schematische Perspektivansicht eines beispielhaften Kegelrads (hier ein Tellerrad), wobei eine einzelne Zahnlücke angedeutet ist, an deren Zahnkante sich Primärgrat gebildet hat;
- **FIG. 1B**: zeigt eine schematische Perspektivansicht des Kegelrads der Fig. 1A, nachdem an der Zahnkante durch Entgraten eine Fase erzeugt wurde, wobei sich an der neu entstandenen Fase im oberen Bereich Sekundärgrat gebildet hat;
- **FIG. 2**: zeigt eine schematische Perspektivansicht eines anderen Kegelrads (hier ein Tellerrad), das gemäß Erfindung entgratet wird, wobei ein Abschnitt der Flugbahn des Entgratwerkzeugs durch deren Einhüllende gezeigt ist;
- **FIG. 3**: zeigt eine schematische Perspektivansicht eines anderen Kegelrads (hier ein Ritzel), das gemäß Erfindung entgratet wird, wobei ein Abschnitt der Flugbahn des Entgratwerkzeugs durch deren Einhüllende gezeigt ist;
- **FIG. 4A**: zeigt eine schematische Perspektivansicht eines weiteren Kegelrads (hier ein Tellerrad) beim Entgraten mit einem einzelnen Entgratmesser zu einem Zeitpunkt t=t0;
- **FIG. 4B**: zeigt eine schematische Perspektivansicht des Kegelrads und des Entgratmessers der Fig. 4A zu einem Zeitpunkt t=t1;
- **FIG. 4C**: zeigt eine schematische Perspektivansicht des Kegelrads und des Entgratmessers der Fig. 4A zu einem Zeitpunkt t=t2;
- **FIG. 4D**: zeigt eine schematische Perspektivansicht des Kegelrads und des Entgratmessers der Fig. 4A zu einem Zeitpunkt t=t3;
- **FIG. 4E**: zeigt eine schematische Perspektivansicht des Kegelrads und des Entgratmessers der Fig. 4A zu einem Zeitpunkt t=t4;
- **FIG. 5**: zeigt eine schematische Darstellung einer beispielhaften Hypozykloide, die im Rahmen der Erfindung zum Einsatz kommen kann;
- **FIG. 6A**: zeigt einen Ausschnitt einer Schlaufe der Hypozykloide der Fig. 5;
- **FIG. 6B**: zeigt einen Ausschnitt einer beispielhaften Epizykloide, die mit denselben Parametern erzeugt wurde, wie die Hypozykloide der Fig. 5;
- **FIG. 7**: zeigt eine perspektivische Teilansicht einer erfindungsgemäßen Verzahnmaschine, die mit einer Entgratvorrichtung ausgestattet ist;
- **FIG. 8**: zeigt eine perspektivische Ansicht einer Entgratvorrichtung zur Verwendung in einer Verzahnmaschine gemäss der vorliegenden Erfindung.

### Detaillierte Beschreibung

In den Figuren 1A und 1B ist eine schematische Perspektivansicht eines Kegelrads 10 gezeigt, wobei anhand dieser beiden Figuren beispielhafte Schritte eines konventionellen Entgratverfahrens erläutert worden sind. Anhand der Figuren 1A und 1B werden auch die Elemente und Begriffe definiert, die hierin verwendet werden.

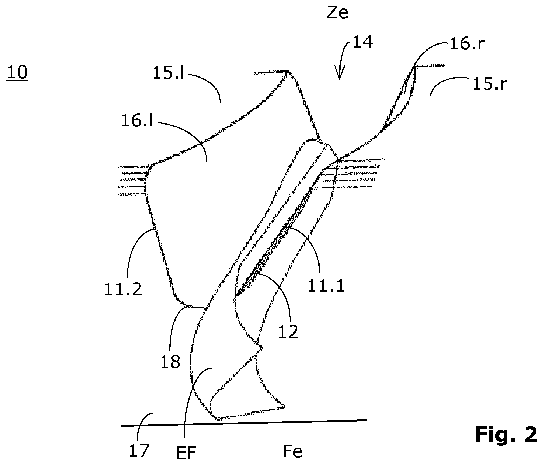

Fig. 2 zeigt eine schematische Perspektivansicht eines anderen Kegelrads 10 (hier ein Tellerrad), das gemäß einer Ausführungsform der Erfindung entgratet wird.

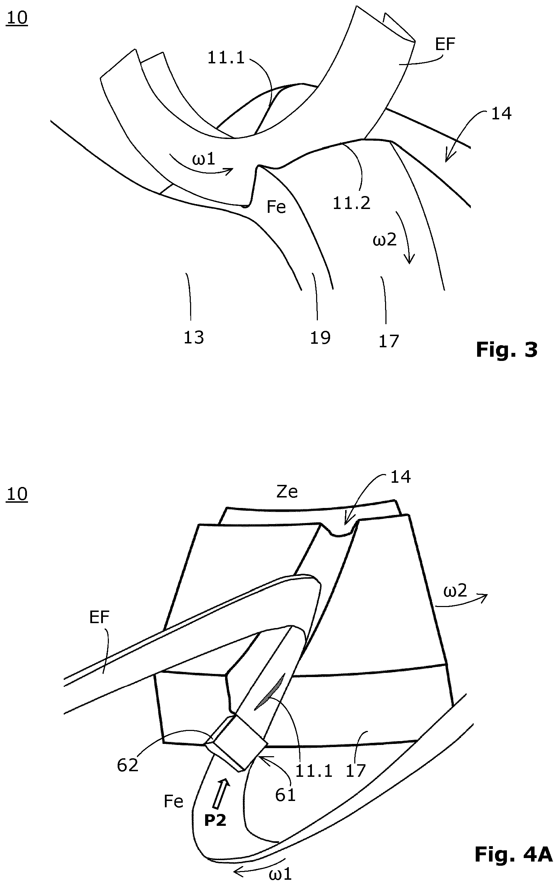

In den genannten Figuren ist in schematischer Form jeweils nur ein Teil des Grundkörpers eines Kegelrades 10 zu erkennen. Eine einzelne Zahnlücke 14 ist im Material des Grundkörpers angedeutet. Es handelt sich bei den gezeigten Beispielen um Kegelräder 10 mit gebogenen Flankenlängslinien, wie man an dem Verlauf der Zähne 15.r. und 15.l erkennen kann. Die Kegelräder 10 der Fig. 1A, 1B, 2 und 4A bis 4E haben eine nach rechts gekrümmte (rechtsspiralige) Flankenlängslinie und das Kegelrad 10 der Fig. 3 hat eine nach links gekrümmte (linksspiralige) Flankenlängslinie.

Ein Verfahren gemäß dem Ausführungsbeiepiiel lässt sich aber nicht nur auf spiralverzahnte Kegelräder 10, sondern auch auf andere Kegelräder 10, zylindrische Stirnräder, Beveloids, Kronenräder und auch auf Innenverzahnungen anwenden.

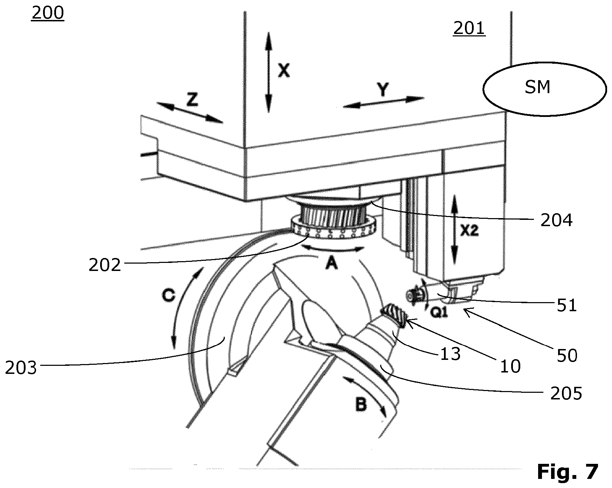

Das Kegelrad 10 weist in den gezeigten Beispielen jeweils einen Grundkörper auf, der durch zwei Kegelstümpfe mit entsprechenden Kegelmantelflächen definiert wird. Bei diesen Kegelmantelflächen handelt es sich, um genau zu sein, um Kegelstumpfmantelflächen. Die beiden Kegelstümpfe sind koaxial zur Werkstückspindelachse B angeordnet. Die Werkstückspindelachse B ist in Fig. 7 zu erkennen.

Die Zähne 15.r. und 15.l des Kegelrads 10 verlaufen entlang der Kopfkegelstumpfmantelfläche. Die in den Figuren 1A, 1B, 2, 3 sowie 4A - 4E mit dem Bezugszeichen 17 bezeichnete Kegelstumpfmantelfläche wird hier auch als (ringförmige) fersenseitige Mantelfläche 17 bezeichnet. Bei Kegelrädern 10 werden auch die Begriffe Kegelradzehe Ze oder einfach Zehe Ze und Kegelradferse Fe bzw. Fuß Fe verwendet. die Zehe Ze des Kegelrads 10 befindet sich in den Figuren 1A, 1B, 2 sowie 4A - 4E am oberen Ende der Zahnlücke 14 und die Ferse Fe befindet sich auf der Seite der Kegelstumpfmantelfläche 17 (hier am unteren Ende der Zahnlücke 14).

Z.B. im Übergangsbereich von den Zähnen 15.r. und 15.l zu der Kegelstumpfmantelfläche 17, können bei der spanabhebenden Bearbeitung (hier als Verzahnen oder Verzahnungsbearbeitung bezeichnet) Grate 20 entstehen (siehe Fig. 1A), wie bereits beschrieben. Im Übergangsbereich der konkaven Zahnflanke 16.r zur Kegelstumpfmantelfläche 17 ergibt sich beim Verzahnen eine erste Zahnkante 11.1 (auch erste Profilkante genannt) und im Übergangsbereich der konvexen Zahnflanke 16.l zur Kegelstumpfmantelfläche 17 ergibt sich beim Verzahnen eine zweite Zahnkante 11.2 (auch zweite Profilkante genannt).

Die Grate 20 bilden sich vor allem an den konkaven Zahnflanken 16.r im Bereich der Ferse Fe und an den konvexen Zahnflanken 16.l im Bereich der Zehe Ze. Es ist jedoch anzumerken, dass Grate 20 sowohl an den Zahnflanken als auch am Zahnfuß 18 einer Zahnlücke 14 vorkommen können.

Um nun den Grat 20 entfernen zu können, wird das Kegelrad 10 in einer Kegelrad-Verzahnmaschine 200 (siehe beispielweise Fig. 7) entgratet. Das Entgraten umfasst gemäß Erfindung beispielsweise die folgenden Schritte:
- Drehantreiben des Entgratwerkzeugs 40 um eine Entgratspindelachse Q1 (siehe beispielweise Fig. 7),
- Drehantreiben des Kegelrades 10 um eine Werkstückspindelachse B (siehe beispielweise Fig. 7).

Das Drehantreiben des Entgratwerkzeugs 40 und das Drehantreiben des Kegelrades 10 erfolgt bei allen Ausführungsformen gekoppelt mit einer inversen Kopplungsübersetzung. Die Kopplungsübersetzung kann zum Beispiel als Verhältnis des Rollkreisradius r zum Grundkreisradius R definiert sein.

Außerdem ist zu beachten, dass es sich um ein kontinuierliches Verfahren zum Entgraten handelt, bei dem die mindestens eine Schneide 41 des Entgratwerkzeugs 40 in Bezug zu dem Kegelrad 10 eine relative Flugbewegung mit einer Bewegungsrichtung der Schneide 41 vom Fuß F zum Kopf K (Entgraten von außen nach innen in die Zahnlücke 14 hinein) oder vom Kopf K zum Fuß F (Entgraten von innen nach außen aus der Zahnlücke 14 heraus) ausführt, wobei die Flugbewegung mathematisch durch eine Hypozykloide Hy im 3-dimensionalen Raum definiert ist.

Im Rahmen des kontinuierlichen Entgratverfahrens wird mindestens an einer Zahnkante (z.B. an der Zahnkante 11.1 oder 11.2) einer Zahnlücke 14 z.B. im Bereich der Ferse Fe durch eine Schneidberührung der Schneide 41 mit der Zahnkante 11.1 oder 11.2 eine Fase 12 erzeugt (in Fig. 2 ist diese Fase 12 grau eingefärbt, um sie deutlich hervorheben zu können). Konkret wird bei dem in Fig. 2 gezeigten Beispiel die Zahnkante 11.1 der konkaven Zahnflanke 16.6 im Fersenbereich Fe des Kegelrads 10 entgratet.

In Fig. 2 ist weder das Entgratwerkzeug 40 noch eine Schneide 41 des Entgratwerkzeugs 40 gezeigt. Stattdessen zeigt Fig. 2 die Flugbahn der Schneide 41, respektive des Schneidkopfs 63, in Form einer einhüllenden Fläche EF. Diese einhüllende Fläche EF schraubt oder windet sich durch die Zahnlücke 14 von außen nach innen.

In den Figuren 4A - 4E ist ein Entgratmesser 61 in schematischer Form in fünf verschiedenen Positionen gezeigt. Der Einfachheit halber umfasst das Entgratmesser 61 hier nur einen rechteckigen Messerschaft 62 und einen Schneidkopf 63. In den Figuren 4A - 4D ist durch eine graue Fläche ein Teil der Kante 11.1 gezeigt, die zu entgraten ist. Diese Kante 11.1 durchdringt die Einhüllende EF zu einem gewissen Teil.

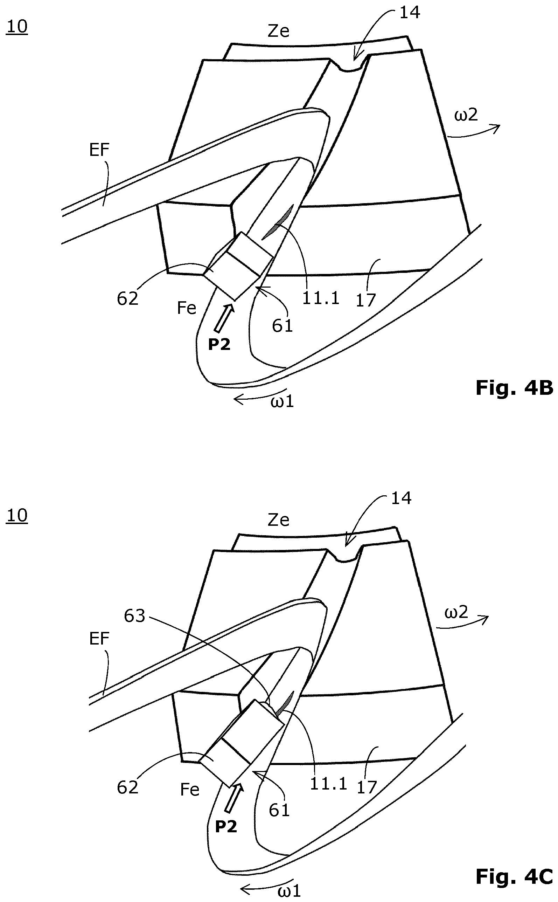

Da das Entgratmesser 61 bei dieser Ausführungsform von außen nach innen in die Zahnlücke 14 hinein geführt wird, steht in Fig. 4A das Entgratmesser 61 zum Zeitpunkt t=t0 (siehe Fig. 4A) und zum Zeitpunkt t=t1 (siehe Fig. 4B) kurz vor der Zahnlücke 14. Fig. 4C zeigt das Entgratmesser 61 zum Zeitpunkt t=t2, wobei es etwa zu diesem Zeitpunkt beginnt einen Grat an der Kante 11.1 abzutragen, respektive eine Fase zu erzeugen.

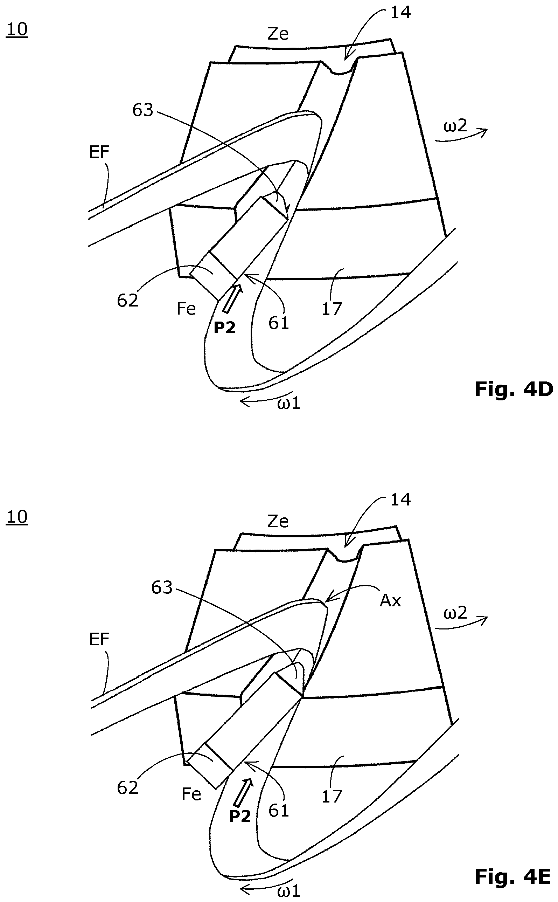

In Fig. 4D ist der Zustand zum Zeitpunkt t=t3 gezeigt. Die Kante 11.1 wurde bereits nahezu vollständig entgratet. In Fig. 4E ist der Zustand zum Zeitpunkt t=t4 gezeigt. Die Kante 11.1 wurde fertig entgratet und das Entgratmesser 61 nähert sich einem Umkehrpunkt (Apex Ax einer Schlaufe der Hypozykloide Hy). Beim Erreichen dieses Umkehrpunktes beginnt sich das Entgratmesser 61 nach oben aus der Zahnlücke heraus zu winden.

Durch den Blockpfeil P2 ist in den Figuren 4A bis 4E jeweils die momentane Bewegungsrichtung angedeutet. In diesem Ausführungsbeispiel wird die Kante 11.1 vom Zahnfuß zum Zahnkopf hin entgratet.

Es geht hier, wie bereits erwähnt, um einen kontinuierlichen Entgratvorgang. Ein kontinuierlicher Entgratvorgang ist ein Vorgang, bei dem sich das Kegelrad 10 und das Entgratwerkzeug 40 gekoppelt im Eingriff miteinander drehen. Das Kegelrad 10 dreht sich dabei um die Werkstückspindelachse B und das Entgratwerkzeug 40 um die Entgratspindelachse Q1. D.h. es gibt eine Bewegungskopplung (kinematische Kopplung) zwischen dem Kegelrad 10 und dem Entgratwerkzeug 40. Während des Entgratens rotieren somit das Entgratwerkzeug 40 und das Kegelrad 10 mit einer exakt aufeinander abgestimmten Kopplungsübersetzung.

Es kommt bei mindestens einem Teil der Ausführungsformen eine elektronische Kopplung zwischen den beiden Drehantrieben des Kegelrads 10 und des Entgratwerkzeugs 40 zum Einsatz.

Es kommt bei allen Ausführungsformen eine inverse Kopplungsübersetzung zum Einsatz und die Werkzeugspur (hier auch als Flugbahn bezeichnet), die ein Schneidkopf 63 eines Entgratmessers 61 im 3-dimensionalen Raum beschreibt, folgt einer Hypozykloide Hy. Die Figuren 2 und 4A - 4E zeigen einen kurzen Abschnitt einer hypozykloiden Flugbahn (dargestellt durch deren Einhüllende EH), wie bereits erwähnt.

Die Kopplungsübersetzung wird so gewählt, dass ein erstes Entgratmesser 61 des Entgratwerkzeugs 40 z.B. von außen nach innen durch eine erste Zahnlücke 14 des Kegelrads 10 bewegt wird. Ein zweites Entgratmesser 61 des Entgratwerkzeugs 40 wird von außen nach innen z.B. durch die nächste Zahnlücke 14 des Kegelrads 10 bewegt, usw.

Bei mindestens einem Teil der Ausführungsformen stehen die Schneiden 41 auf einem Kreis am Entgratwerkzeug 40. Der Schneidkeil (hier Schneidkopf 63 genannt) wird so auf den stabförmigen Schaft 62 des Entgratmessers 61 gelegt, dass sich ein sinnvoller Spanwinkel sowie positive Freiwinkel ergeben.

In der Fig. 3 ist eine weitere Ausführungsform der Erfindung gezeigt. Es ist ein Teil eines Kegelrades 10 (hier ein Ritzel) mit Blick auf den Rückenkegel 19 bzw. auf die Fersenseite Fe gezeigt. In der Darstellung der Fig. 3 ist auch ein Teil einer Spanvorrichtung 13 zu erkennen, die dazu dient das Kegelrad 10 an einer Werkstückspindel 205 der Maschine 200 zu befestigen.

Wie in den Figuren 2, 3 und 4A - 4E angedeutet, folgt das Entgratmesser 61 des Entgratwerkzeugs 40 einer hypozykloiden Flugbahn, die in sich geschraubt oder verwunden ist. D.h., der Entgratwerkzeug 40 vollzieht aufgrund der starken Verwindung der hypozykloiden Flugbahn mit seinen Entgratmessern 61 eine in sich verwundene Drehbewegung um die Entgratspindelachse Q1 (wenn man von dem Standpunkt eines ruhenden, sich nicht drehenden Kegelrades 10 ausgeht).

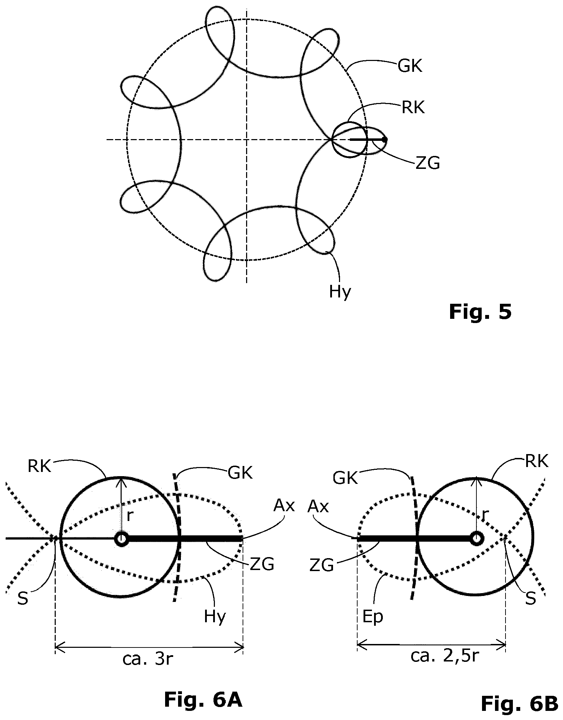

Anders als eine Epizykloide, die durch das Abrollen eines Rollkreises außen an einem Grundkreis erzeugt wird, wird eine Hypozykloide Hy durch das Abrollen eines Rollkreises RK innen in einem Grundkreis GK erzeugt (Details sind der beispielhaften Fig. 5 zu entnehmen). Wenn man eine Epizykloide mit einer Hypozykloide HY vergleicht und wenn beide mit denselben Parametern erzeugt wurden, so wird ersichtlich, dass die Hypozykloide HY eine grössere Umdrehungsanzahl (Anzahl Schlaufen) pro Vollkreis des Grundkreises GK hat als die entsprechende (mit gleichen Grundkreis- und Rollkreisradien) Epizykloide. Daraus ergibt sich zwangsläufig, dass die Hypozykloide HY im Bereich der Schlaufen eine stärkere Krümmung aufweist kann als die entsprechende Epizykloide.

Bei mindestens einem Teil der Ausführungsformen werden die Parameter der Hypozykloide HY so gewählt, dass die Hypozykloide HY mehrere Schlaufen aufweist, die radial nach außen weisen, während bei der Epizykloide die Schlaufen radial nach innen weisen.

In Fig. 5 ist eine Hypozykloide Hy als Beispiel gezeigt. Es wurden die folgenden Parameter verwendet, um diese Hypozykloide Hy zu erzeugen: R = 6 x r; Zeigerlänge (auch Flugkreisradius genannt)= 2 x r (R ist der Radius des Grundkreises GK und r der Radius des Rollkreises RK). Der Zeiger ist in Fig. 5 mit ZG bezeichnet. Da der Zeiger ZG eine Zeigerlänge hat, die größer ist als der Radius r, handelt es sich bei der Hypozykloide Hy der Fig. 5 um eine verlängerte Hypozykloide Hy. Insgesamt umfasst diese beispielhaft gezeigt Hypozykloide Hy sieben Schlaufen, die radial nach außen weisen. In der Praxis werden die Parameter zur Definition der Hypozykloide Hy oft so gewählt, dass sich die Schlaufen nicht bereits nach einer Vollumdrehung wiederholen. Die Einhüllende der Figuren 4A bis 4E kann z.B. einen Teil einer Schlaufe der Fig. 5 darstellen.

In Fig. 3 ist anhand eines weiteren Kegelrades 10 (hier ein Ritzel) die starke Krümmung der Flugbahn zu erkennen. Konkret ist in Fig. 3 ein kurzer Abschnitt der Einhüllenden EH der Flugbahn gezeigt. Das Kegelrad 10 ist hier von schräg unten gezeigt. Man sieht einen Teil der Spanvorrichtung 13 und die Stirnfläche 19 an der Ferse Fe des Kegelrades 10. Weiterhin ist zu erkennen wie eine Zahnlücke 14 im Bereich der Kegelstumpfmantelfläche 17 aus dem Material des Kegelrades 10 austritt. In diesem Bereich befinden sich die beiden Zahnkanten 11.1 und 11.2.

Die gezeigte Einhüllenden EH beschreibt im Wesentlichen die Bewegung des Schneidkopfes 63 von außerhalb der Zahnlücke 14 in die Zahnlücke 14 hinein. In Fig. 3 ist deutlich zu erkennen, dass die Flugbahn aufgrund eines relativ kleinen Radius eine starke Krümmung aufweist. Dadurch bedingt, kommt es kurz nach der Schneidberührung zu einem Austauchen des Entgratmessers 61 aus der Zahnlücke 14. Außerdem kann man der Fig. 3 entnehmen, dass das Entgraten hier vom Fuß F zum Kopf K erfolgt und dass sich die Schneide 41 des Schneidkopfes 63 unmittelbar nach der Schneidberührung von der entgrateten Zahnkante 11.2 weg und aus der Zahnlücke 14 hinaus bewegt.

In den Figuren 4A bis 4E ist, wie bereits beschrieben, in schematischer Form der Abschnitt eines weiteren Kegelrades 10 beim Entgraten gezeigt. Das Entgratmesser 61 bewegt sich von rechts nach links entlang der hypozykloiden Flugbahn, wie durch die schraubenförmig verlaufende Einhüllende EH gezeigt.

Um die Bewegungsabläufe und die Zusammenhänge besser verdeutlichen zu können, sind die Drehrichtungen des Entgratwerkzeugs 40 und des Kegelrades 10 durch die Pfeilbögen ω1 und ω2 angedeutet.

Bei dem in Fig. 3 gezeigten Ausführungsbeispiel mit linksspiralig verlaufenden Zahnlücken 14, wird das Kegelrad 10 im Gegenuhrzeigersinn drehangetrieben (diese Drehrichtung wird in Blickrichtung der Werkstückspindelachse B zum Kegelrad 10 betrachtet) und das Entgratwerkzeug 40 wird im Uhrzeigersinn drehangetrieben (auch diese Drehrichtung wird in Blickrichtung der Werkstückspindelachse B betrachtet). Die Drehrichtung ω2 eilt in Bezug auf die Drehrichtung ω1 davon. Diese relative Orientierung der beiden Drehrichtungen ω1 und ω2 wird hier als inverse Kopplung bezeichnet. In den Figuren 4A - 4E ist auch eine inverse Kopplung der beiden Drehrichtungen ω1 und ω2 gezeigt. In beiden Fällen geht es um eine inverse Kopplung für das Führen des Entgratwerkzeugs 40 von außen nach innen entlang einer hypozykloiden Flugbahn.

Es ist hier zu erkennen, dass sich durch die inverse Kopplung die zu entgratende Zahnkante 11.1 oder 11.2 von der Einhüllenden EH wegbewegt. Falls also das Entgratwerkzeug 40 nacheilen sollte, so würde sich die Schneide 41 des Schneidkopfes 63 nicht tiefer in das Material des Kegelrades 10 hinein fressen.

Wenn ein Vorgang zum Entgraten von Innen nach Außen gewählt wird, dann wird das Entgratwerkzeug 40 aus der Zahnlücke 14 heraus nach außen entlang einer hypozykloiden Flugbahn geführt. Wenn man die Bewegungsrichtung ω2 der Figuren 4A - 4E beibehält, dann muss die Bewegungsrichtung ω1 umgekehrt werden, um weiterhin eine inverse Kopplung zu erreichen.

Bei den Darstellungen der Figuren 2, 3, 4A - 4E und 5 ist zu beachten, dass diese aus der Sicht eines ruhenden, sich nicht drehenden Kegelrad-Werkstücks 10 gezeigt sind. D.h. bei der Fig. 5 ruht der Grundkreis GK und der Rollkreis RK rollt innen entlang des Grundkreises GK. Dabei zeichnet der Zeiger ZG die Hypozykloide Hy in die Zeichenebene.

In einer CNC-Verzahnmaschine 200, wie z.B. in Fig. 7 gezeigt, werden die erforderlichen Relativbewegungen beispielsweise dadurch erzeugt, dass der Mittelpunkt des Rollkreises RK im Raum fixiert ist, während sich der Grundkreis GK dreht. Der Rollkreis RK rollt im Inneren des Grundkreises GK ab, und es wird eine Hypozykloide HY relativ zu dem sich drehenden Kegelrad 10 erzeugt.

Die inverse Kopplung, respektive die Kopplungsübersetzung wird so gewählt, dass es jeweils nur im Bereich der zu entgratenden Zahnkanten (11.1 oder 11.2) zwischen dem Entgratwerkzeug 40 und dem Kegelrad 10 zu einer kurzzeitigen Schneidberührung kommt. Die Kopplungsübersetzung ist durch das Verhältnis der beiden Radien R und r definiert.

Bei mindestens einem Teil der Ausführungsformen wird die inverse Kopplungsübersetzung so gewählt, dass die hypozykloide Flugbahn im Vergleich zu einer epizykloiden Flugbahn, die mit den selben Parametern erzeugt wurde, im Bereich der Schlaufen eine längere Ausdehnung hat. Dies wird im Folgenden anhand einer beispielhaften Gegenüberstellung der Schlaufen einer Hypozykloide Hy und einer Epizykloide Ep weiter erläutert. In Fig. 6A ist eine der Schlaufen der Hypozykloide Hy der Fig. 6A in einer vergrößerten Darstellung gezeigt. Diese Hypozykloide Hy wurde mit den folgenden Parametern erzeugt: R = 6 x r; Zeigerlänge = 2 x r. In Fig. 6B ist eine der Schlaufen einer Epizykloide Ep in einer vergrößerten Darstellung gezeigt. Diese Epizykloide Ep wurde mit denselben Parametern erzeugt. Wie bereits zuvor erwähnt, weisen die Schlaufen der Hypozykloide Hy radial nach außen (in Bezug auf den Grundkreis GK), wohingegen die Schlaufen der Epizykloide Ep radial nach innen weisen (in Bezug auf den Grundkreis GK). Man kann in der Gegenüberstellung der Figuren 6A und 6B erkennen, dass die Schlaufe der Hypozykloide Hy eine Längenausdehnung (gemessen vom Apex Ax zum Schnittpunkt S) parallel zur horizontal verlaufenden Achse hat, die ca. 3r beträgt. Die Längenausdehnung der Schlaufe der Epizykloide Ep ist deutlich kürzer (sie beträgt ca. 2,5r). Das bedeutet für praktische Anwendungen, dass sich die Schneide 41 des Entgratmessers 61 nach der Schneidberührung schneller und weiter von dem Kegelrad 10 entfernt, als dies bei einer entsprechenden Epizykloide der Fall wäre. dadurch werden Kollisionen vermieden.

Fig. 7 zeigt in perspektivischer Darstellung den Grundaufbau einer CNC-Verzahnmaschine 200, die zum Verzahnen und Entgraten von bogenverzahnten Kegelrädern 10 ausgelegt ist. Eine solche Maschine 200 ist so ausgelegt oder umgerüstet, dass ein Entgraten des Kegelrades 10 mittels einer Entgratvorrichtung 50 vorgenommen werden kann, die ein Entgratwerkzeug 40 an einer Entgratspindel 51 trägt.

Die Erfindung lässt sich jedoch auch auf anderen CNC-Verzahnmaschine 200 anwenden, die mit einer Entgratvorrichtung 50, wie beispielsweise in Fig. 7 gezeigt, ausgestattet sind.

Die CNC-Verzahnmaschine 200 kann wie folgt aufgebaut sein. Die Maschine 200 kann ein Maschinengehäuse 201 umfassen, das es ermöglicht eine Werkzeugspindel 204 entlang einer Koordinatenachse X (1. Achse) linear vertikal, entlang einer Koordinatenachse Y (2. Achse) linear horizontal sowie entlang einer Koordinatenachse Z (3. Achse) linear horizontal zu führen. Die genannte Werkzeugspindel 204 kann beispielsweise hängend an der Maschine 200 angeordnet sein, wobei die entsprechende Werkzeugspindelachse A (4. Achse) vertikal im Raum hängt. Die Werkzeugspindel 204 trägt ein Werkzeug, hier beispielshalber einen Messerkopf 202 mit mehreren Stabmessern (die Stabmesser sind nicht zu sehen).

An der Maschine 200 kann beispielsweise eine erste Schwenkvorrichtung 203 vorgesehen sein, die eine Werkstückspindel 205 mit einer Werkstückspindelachse B (5. Achse) trägt. Die Werkstückspindel 205 samt Werkstückspindelachse B kann um eine Schwenkachse (C-Achse; 6. Achse) der ersten Schwenkvorrichtung 203 geschwenkt werden. Die Schwenkachse C steht senkrecht zur Werkzeugspindelachse A und verläuft hier horizontal im Raum. Wenn man von vorne in Richtung der Schwenkachse C auf die Maschine 200 der Fig. 7 schaut, dann steht die Werkstückspindel 205 in dem gezeigten Moment schräg in einer 14 Uhr-Stellung. In dieser Stellung kann z.B. ein Entgratwerkzeug 40 der Entgratvorrichtung 50 mit dem Kegelrad-Werkstück 10 in Wechselwirkung gebracht werden.

Die Werkstückspindel 205 trägt im gezeigten Beispiel ein bogenverzahntes Kegelradritzel als Werkstück 10. Eine Spanvorrichtung 13 kann zum Verbinden des Kegelrades 10 mit der Werkstückspindel 205 dienen.

Die erste Schwenkvorrichtung 203 kann beispielweise so um die C-Achse schwenkbar gelagert sein, dass das Kegelrad 10 in eine Bearbeitungsposition unterhalb des Verzahnwerkzeugs 202 schwenkbar ist. Außerdem kann das Kegelrad 10 durch die erste Schwenkvorrichtung 203 zum Entgraten in eine geeignete Stellung relativ zum Entgratwerkzeug 40 der Entgratvorrichtung 50 überführt werden.

Außerdem kann die Entgratvorrichtung 50 zum Beispiel mit Zustellvorrichtung(en) versehen sein, um das Entgratwerkzeug 40 relativ zum Kegelrad 10 bewegen und mit diesem in Wechselwirkung bringen zu können.

Die Zustellvorrichtung kann bei allen Ausführungsformen z.B. eine Linearachse X2 umfassen, wie in Fig. 2 bespielhaft gezeigt.

Die Entgratvorrichtung 50, die einen Entgratmesserkopf 40 umfasst, kann z.B. eine Linearachse X2 (7. Achse) und eine Entgratspindelachse Q1 (8. Achse) umfassen, wie in Fig. 7 gezeigt.

Die Maschine 200 ist so ausgelegt, dass bei allen Ausführungsformen das Kegelrad 10 und das Entgratwerkzeug 40 invers gekoppelt drehangetrieben werden können, wobei diese Kopplung durch eine Kopplungsübersetzung definiert ist.

Unter Einsatz einer oder mehrerer der genannten Achsen, kann das Entgratwerkzeug 40 relativ zum Kegelrad 10 in eine für das Entgraten geeignete Ausgangsposition gebracht werden.

Dann werden das Kegelrad 10 um die Werkstückspindelachse B und das Entgratwerkzeug 40 um die Entgratspindelachse Q1 gekoppelt drehangetrieben und relativ zueinander bewegt. In einem kontinuierlichen Verfahren führen die Schneiden des Entgratwerkzeugs 40 (z.B. die Schneiden 41 der Entgratmesser 61 des Entgratmesserkopfes 40) an den vorbestimmten Kanten 11.1 und/oder 11.2 des Kegelrads 10 entsprechende Entgratbewegungen von Außen nach Innen aus.

Die Schwenkachse D kann aber bei allen Ausführungsformen der Erfindung auch eine andere Orientierung im Raum haben. Die konkrete Anordnung der optionalen Schwenkachse D hängt von der Gesamtkonstellation aller Achsen der Maschine 200 ab, da es letztendlich darauf ankommt das Werkstück 10 und das Entgratwerkzeug 40 so relativ zueinander zu bewegen, dass eine geeignete Entgratbewegung entlang einer Hypozykloide Hy ausgeführt werden kann.

Um das Anfasen/Entgraten im kontinuierlichen Verfahren realisieren zu können, werden Kegelrad-Verzahnmaschinen 200 mit mindestens sechs numerisch gesteuerten Achsen, wie beispielhaft in den Fig. 7 gezeigt, bevorzugt.

Es können jedoch auch andere CNC-Kegelrad-Verzahnmaschinen 200 gemäss Erfindung umgerüstet oder ausgestattet werden, wobei Maschinen mit sieben, acht oder neun numerisch gesteuerten Achsen bevorzugt sind, wie bereits anhand der Fig. 7 erläutert wurde.

Die Entgratvorrichtung 50 umfasst vorzugsweise bei allen Ausführungsformen eine Entgratspindel 51 mit der bereits erwähnten Entgratspindelachse Q1, die hier im gezeigten Beispiel eine horizontale Orientierung hat. An der Entgratspindel 51 kann ein Entgratwerkzeug 40 befestigt sein, wie in Fig. 7 gezeigt. Bei dem in Fig. 7 gezeigten Entgratwerkzeug 40 handelt es sich konkret um einen Entgratmesserkopf 40, der mit Messereinsätzen (z.B. in Form von Stabmessern 61) so bestückt ist, dass diese radial aus dem Umfang des Entgratwerkzeugs 40 heraus ragen.

Bei mindestens einem Teil der Ausführungsformen sind die Stabmesser 61 leicht schräg versetzt am Entgratmesserkopf 40 angeordnet, so dass die Längsachsen der Messerschäfte 62 nicht die Spindelachse Q1 schneiden. Einerseits lassen sich durch dieses versetzte Anordnen die einzelnen Stabmesser 61 besser am Entgratmesserkopf 40 befestigen und andererseits kann die Spanfläche am Schneidkopf 63 optimal in Bezug auf die Schnittrichtung ausgerichtet werden.

Numerisch steuerbare Achsen sind in diesem Zusammenhang Achsen, die über eine programmierbare Steuerung ansteuerbar sind. Die numerisch steuerbaren Achsen sind so ausgebildet und angeordnet, dass durch das Verstellen mindestens einer der Achsen die Werkstückspindel 205 samt des Kegelrads 10 relativ zu dem Entgratwerkzeug 40 so bewegbar ist, dass Schneiden 41 des Entgratwerkzeugs 40 bei gleichzeitigem gekoppeltem, inversen Rotieren der Werkstückspindel 205 um die Werkstückspindelachse B und des Entgratwerkzeugs 40 um die Entgratspindelachse Q1 nacheinander von außen nach innen in Zahnlücken 14 benachbarter Zähne 15.r, 15.l des Kegelrads 10 eintauchen und eine Entgratungsbewegung in Bezug auf die vorgegebenen Zahnkanten 11.1, 11.2 des Kegelrads 10 ausführen.

Wie in Fig. 7 angedeutet, kann die Entgratspindelachse Q1 der Entgratvorrichtung 50 zum Beispiel parallel zur Y-Achse verlaufen. Es sind aber andere Achskonstellationen möglich.

Gemäss Erfindung kommen vorzugsweise bei allen Ausführungsformen eine oder mehrere der numerisch gesteuerten Achsen zum Einsatz, um die Schneiden 41 des Entgratwerkzeugs 40 relativ zu dem Werkstück 10 zu bewegen.

Da sich das Kegelrad 10 mit einer vorgegebenen ersten Winkelgeschwindigkeit ω2 um die Werkstückachse B und das Entgratwerkzeug 60.1 mit einer zweiten Winkelgeschwindigkeit ω1 um die Entgratspindelachse Q1 dreht und da die beiden Drehbewegungen (elektronisch) gekoppelt gegenläufig erfolgen, ergeben sich für die Messereinsätze 61 des Entgratwerkzeugs 40 komplexe schraubenförmige Flugbahnen im 3-dimensionalen Raum, wie anhand der Einhüllenden EH gezeigt.

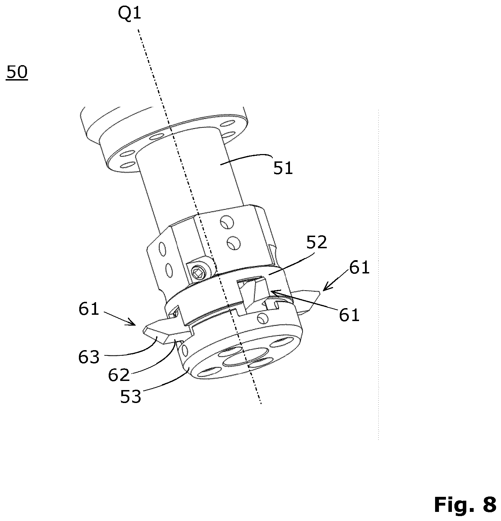

Das Beispiel eines geeigneten Entgratmesserkopfes 40 ist dem erteilten Europäischen Patent EP1598137 B1 zu entnehmen. Ein entsprechender Entgratmesserkopf 40 ist in Fig. 8 gezeigt. Details, die hier nicht beschrieben wurden, können dem genannten Patent EP1598137 B1 entnommen werden.

Bevorzugt ist eine Ausführungsform eines Entgratmesserkopfes 40, die, wie in Fig. 8 gezeigt, einen modularen Aufbau hat. Es kommt ein zylindrisch geformter Grundhalter 51 zum Einsatz, der im unteren Bereich n (vorzugsweise mit n = 1, 2, 3, 4, 5, 6) rechteckförmige Ausnehmungen aufweist, deren Größe auf den Querschnitt des Schaftes 62 der Stabmesser 61 ausgelegt ist. Es kann ein Ring 52 auf den unteren Bereich des Grundhalters 51 aufgeschoben werden, wie in Fig. 8 zu erkennen ist. Der Ring 52 hat vorzugsweise Ausnehmungen, die teilweise um die Stabmesser 61 herum greifen. Es kann ein Klemmdeckel 53 vorgesehen sein, der den unteren Bereich des Entgratmesserkopfs 40 abdeckt, wie in Fig. 8 zu erkennen ist.

**Bezugszeichen:**

| | |
|---|---|
| Kegelrad / Kegelrad-Werkstück | 10 |
| erste Zahnkante / erste Profilkante | 11.1 |
| zweite Zahnkante / zweite Profilkante | 11.2 |
| erste Fase(n) | 12 |
| Spanvorrichtung | 13 |
| Zahnlücke | 14 |
| rechter Zahn | 15.r |
| linker Zahn | 15.l |
| konkave Zahnflanke | 16.r |
| konvexe Zahnflanke | 16.l |
| Kegelstumpfmantelfläche / Rückenfläche | 17 |
| Zahnfuß | 18 |
| Rückenkegel | 19 |
| | |
| Primärgrat(e) | 20 |
| Sekundärgrat(e) | 21 |
| | |
| Entgratwerkzeug / Entgratmesserkopf | 40 |
| Schneide | 41 |
| Entgratvorrichtung | 50 |
| Entgratspindel/Grundhalter | 51 |
| Ring | 52 |
| Klemmdeckel | 53 |
| Messereinsätze /Entgratmesser | 61 |
| Messerschaft | 62 |
| Schneidkopf | 63 |
| | |
| Kegelrad-Verzahnmaschine / CNC-Verzahnmaschine | 200 |
| Maschinengehäuse | 201 |
| (Verzahn-)Werkzeug / Messerkopf | 202 |
| Schwenkvorrichtung | 203 |
| Werkzeugspindel | 204 |
| Werkstückspindel | 205 |
| | |
| Werkzeugspindelachse | A |
| Apex | Ax |
| Werkstückspindelachse | B |
| Schwenkachse/Drehachse | C |
| | |
| Grundkreis | GK |
| Winkel | Y |
| einhüllende Fläche | EF |
| Epizykloide | EP |
| Zahnfuß/Fuß | F |
| Kegelradferse/Ferse | Fe |
| Hypozykloide | Hy |
| Zahnkopf/Kopf | K |
| Anzahl | n |
| Schnittrichtung | P1, P2 |
| Entqratspindelachse | Q1 |
| Radius Rollkreis | r |
| Radius Grundkreis | R |
| Rollkreis | RK |
| Zeit | t |
| Schnittpunkt | S |
| Softwaremodul | SM |
| Zeitpunkte | t0, t1, t2 |
| Drehbewegungen | ω1, ω2 |
| Koordinatenachse / Linearachse | X |
| Koordinatenachse / Linearachse | X2 |
| Koordinatenachse / Linearachse | Y |
| Koordinatenachse / Linearachse | Z |
| Kegelradzehe/Zehe | Ze |
| Zeiger | ZG |
| Zähnezahl | z1 |

## Patentansprüche

1. Verfahren zum Entgraten von Kegelrädern mit einem Entgratwerkzeug (40), das mindestens eine Schneide (41) umfasst, mit den Schritten:
- Drehantreiben des Entgratwerkzeugs (40) um eine Entgratspindelachse (Q1),
- Drehantreiben eines Kegelrades (10) um eine Werkstückspindelachse (B), wobei
- das Drehantreiben des Entgratwerkzeugs (40) und das Drehantreiben des Kegelrades (10) gekoppelt mit einer inversen Kopplungsübersetzung erfolgt,
**dadurch gekennzeichnet, dass**
- es sich um ein kontinuierliches Verfahren zum Entgraten handelt, bei dem die Schneide (41) in Bezug zu dem Kegelrad (10) eine relative Flugbewegung ausführt,
- die relative Flugbewegung durch eine Hypozykloide (Hy) definiert ist, und wobei
- mindestens an einer Zahnkante (11.1, 11.2) einer Zahnlücke (14) im Bereich der Kegelradferse (Fe) und/oder der Kegelradzehe (Ze) durch eine Schneidberührung der Schneide (41) mit der Zahnkante (11.1, 11.2) ein Grat entfernt wird.

2. Verfahren nach Anspruch 1, **dadurch gekennzeichnet, dass** die relative Flugbewegung der Schneide (41) von einem Bereich in der Nähe eines Zahnfußes (F) in Richtung eines Zahnkopfes (K) des Kegelrades (10) in die Zahnlücke (14) hinein führt.

3. Verfahren nach Anspruch 1 oder 2, **dadurch gekennzeichnet, dass** es sich bei der inversen Kopplungsübersetzung um eine hypozykloidische Kopplung handelt.

4. Verfahren nach Anspruch 1, 2 oder 3, **dadurch gekennzeichnet, dass** sich die inverse Kopplungsübersetzung aus der Zähnezahl (z1) des Kegelrades (10) und der Gangzahl des Entgratwerkzeugs (40) ergibt.

5. Verfahren nach Anspruch 2, **dadurch gekennzeichnet, dass** es durch die relative Flugbewegung der Schneide (41) in die Zahnlücke (14) des Kegelrades (10) hinein, zu einer Schneidberührung der Schneide (41) mit der Zahnkante (11.1, 11.2) der Zahnlücke (14) des Kegelrades (10) kommt, wobei durch diese Schneidberührung der Grat im Bereich dieser Kante entfernt wird.

6. Verfahren nach Anspruch 5, **dadurch gekennzeichnet, dass** die relative Flugbewegung der Schneide (41) so gerichtet ist, dass sich die Zahnkante (11.1, 11.2) nach der Schneidberührung relativ zu der Schneide (41) wegbewegt.

7. Verfahren nach einem der Ansprüche 1 bis 6, **dadurch gekennzeichnet, dass** sich aufgrund der inversen Kopplungsübersetzung beim Entgraten automatisch eine kleiner werdende Fase im Bereich der Zahnkante (11.1, 11.2) ergibt, falls das Entgratwerkzeug (40) nachzueilen beginnt.

8. CNC-Verzahnmaschine (200) mit einer Werkstückspindel (205) zum Aufnehmen und Drehantreiben eines Werkstücks (10), mit mindestens sechs Achsen (X, Y, Z, B, C, Q1) und mit einem Softwaremodul (SM), das zum Ausführen des Verfahrens nach einem der Ansprüche 1 bis 7 ausgelegt ist.

9. CNC-Verzahnmaschine (200) nach Anspruch 8, **dadurch gekennzeichnet, dass** das Softwaremodul (SM) dazu auslegt ist eine inverse Kopplungsübersetzung mit hypozykloider Flugbahn vorzugeben.

## Claims

1. A method for deburring bevel gears using a deburring tool (40), which comprises at least one cutting edge (41), with the steps:
- rotationally driving the deburring tool (40) around a deburring spindle axis (Q1),
- rotationally driving a bevel gear (10) around a workpiece spindle axis (B),
wherein
- the rotational driving of the deburring tool (40) and the rotational driving of the bevel gear (10) take place in a coupled manner with an inverse coupling transmission ratio,
**characterized in that**
- it is a continuous method for deburring, in which the cutting edge (41) executes a relative flight movement in relation to the bevel gear (10),
- the relative flight movement is defined by a hypocycloid (Hy), and wherein
- a burr is removed at least on one tooth edge (11.1, 11.2) of a tooth gap (14) in the region of the bevel gear heel (Fe) and/or the bevel gear toe (Ze) by a cutting contact of the cutting edge (41) with the tooth edge (11.1, 11.2).

2. The method according to claim 1, **characterized in that** the relative flight movement of the cutting edge (41) leads from a region in the vicinity of a tooth base (F) in the direction of a tooth head (K) of the bevel gear (10) into the tooth gap (14).

3. The method according to claim 1 or 2, **characterized in that** the inverse coupling transmission ratio is a hypocycloid coupling.

4. The method according to claim 1, 2, or 3, **characterized in that** the inverse coupling transmission ratio results from the number of teeth (z1) of the bevel gear (10) and the number of threads of the deburring tool (40).

5. The method according to claim 2, **characterized in that**, due to the relative flight movement of the cutting edge (41) into the tooth gap (14) of the bevel gear (10), a cutting contact of the cutting edge (41) with the tooth edge (11.1, 11.2) of the tooth gap (14) of the bevel gear (10) occurs, wherein the burr is removed in the region of this edge by this cutting contact.

6. The method according to claim 5, **characterized in that** the relative flight movement of the cutting edge (41) is oriented so that the tooth edge (11.1, 11.2) moves away in relation to the cutting edge (41) after the cutting contact.

7. The method according to any one of claims 1 to 6, **characterized in that**, because of the inverse coupling transmission ratio during the deburring, a chamfer which becomes smaller automatically results in the region of the tooth edge (11.1, 11.2) if the deburring tool (40) begins to lag.

8. A CNC gear-cutting machine (200) having a workpiece spindle (205) for accommodating and rotationally driving a workpiece (10), having at least six axes (X, Y, Z, B, C, Ql), and having a software module (SM), which is designed to execute the method according to any one of claims 1 to 7.

9. The CNC gear-cutting machine (200) according to claim 8, **characterized in that** the software module (SM) is designed to predefine an inverse coupling

## Revendications

1. Procédé pour ébavurer des roues coniques avec un outil à ébavurer (40) comprenant au moins une lame (41), comprenant les étapes consistant à :
- entraîner en rotation l'outil à ébavurer (40) autour d'un axe de broche d'ébavurage (Q1),
- entraîner en rotation une roue conique (10) autour d'un axe de broche de pièce (B),
dans lequel
- l'entraînement en rotation de l'outil à ébavurer (40) et l'entraînement en rotation de la roue conique (10) s'effectuent de façon couplée avec une transmission de couplage inversée,
**caractérisé en ce que**
- il s'agit d'un procédé d'ébavurage continu, dans lequel la lame (41) effectue un mouvement relatif par rapport à la roue conique (10),
- le mouvement relatif est défini par une hypocycloïde (Hy), et **en ce que**
- au moins au niveau d'une arête de dent (11.1, 11.2) d'un entredent (14), il est éliminé une bavure dans la zone du talon de roue conique (Fe) et/ou de l'orteil de roue conique (Ze) par contact de la lame (41) avec l'arête de dent (11.1, 11.2).

2. Procédé selon la revendication 1, **caractérisé en ce que** le mouvement relatif de la lame (41) pénètre dans l'entredent (14) depuis une zone à proximité d'un pied de dent (F) en direction d'une tête de dent (K) de la roue conique (10).

3. Procédé selon la revendication 1 ou 2, caractérisé en ce la transmission de couplage inversée est un couplage hypocycloïdique.

4. Procédé selon la revendication 1, 2 ou 3, **caractérisé en ce que** la transmission de couplage inversée résulte du nombre de dents (z1) de la roue conique (10) et du nombre de filets de l'outil à ébavurer (40).

5. Procédé selon la revendication 2, **caractérisé en ce que** le mouvement relatif de la lame (41) dans l'entredent (14) de la roue conique (10) entraîne un contact de la lame (41) avec l'arête de dent (11.1, 11.2) de l'entredent (14) de la roue conique (10), ce mouvement de contact de la lame retirant la bavure dans la zone de cette arête.

6. Procédé selon la revendication 5, **caractérisé en ce que** le mouvement relatif de la lame (41) est dirigé de sorte que l'arête de dent (11.1, 11.2), après le contact de la lame, s'écarte de la lame (41).

7. Procédé selon l'une des revendications 1 à 6, **caractérisé en ce que**, du fait de la transmission de couplage inversée lors de l'ébavurage, il résulte automatiquement un chanfrein qui diminue dans la zone de l'arête de dent (11.1, 11.2) lorsque l'outil à ébavurer (40) commence à suivre.

8. Machine à tailler les engrenages CNC (200) comprenant une broche de pièce (205) pour recevoir et entraîner en rotation une pièce à usiner (10), comprenant au moins six axes (X, Y, Z, B, C, Q1) et comprenant un module logiciel (SM) qui est conçu pour effectuer le procédé selon l'une des revendications 1 à 7.

9. Machine à tailler les engrenages CNC (200) selon la revendication 8, **caractérisée en ce que** le module logiciel (SM) est conçu pour définir une transmission de couplage inversée avec trajectoire hypocycloïde.
